# EUROPÄISCHE PATENTSCHRIFT

(11) **EP 0 563 350 B1**
(45) Veröffentlichungstag und Bekanntmachung des Hinweises auf die Patenterteilung: **15.01.1997**
(21) Anmeldenummer: 92921158.9
(22) Anmeldetag: 14.10.1992
(51) Int. Cl.: B27C 1/10, B23Q 11/00

(54) **HANDHOBELMASCHINE**
HAND-HELD PLANING MACHINE
RABOTEUSE A MAIN

(30) Priorität: 22.10.1991 DE 4134768
(43) Veröffentlichungstag der Anmeldung: 06.10.1993
(73) Patentinhaber: ROBERT BOSCH GMBH, 70442 Stuttgart (DE)
(72) Erfinder: HILD, Eugen, D-7441 Aichtal (DE); FLÖTTMANN, Kai-Uwe, D-4830 Gütersloh (DE)
(86) Internationale Anmeldenummer: DE9200867
(87) Internationale Veröffentlichungsnummer: WO9308004

(56) Entgegenhaltungen:
- DE-A- 3 406 728
- DE-A- 3 542 263
- DE-B- 1 080 764
- DE-U- 7 131 774
- DE-U- 8 631 998
- FR-A- 2 471 262

## Beschreibung

### Stand der Technik

Die Erfindung geht aus von einer Handhobelmaschine nach der Gattung des Anspruchs 1.

Durch die DE-OS 34 06 728 ist eine gattungsgemäße Handhobelmaschine bekannt, bei der die Späne aus einer Spanausschuböffnung eines Spanförderkanals durch die Pump- bzw. Saugwirkung eines oder zweier Kühlluftströme zu zwei, wahlweise im Wechsel zu öffnenden, Spanauswurföffnungen abtransportiert werden. Mit einem schwenkbaren, klappenartigen Ventil ist die Spanauswurföffnung quer zur Vorschubrichtung nach der einen oder anderen Seite freigebbar. Diese Handhobelmaschine hat den Nachteil, daß der Spänetransport durch den Kühlluftstrom am bzw. im Spanförderkanal mit zu geringem Wirkungsgrad vonstatten geht, d.h. eine zu hohe Luft/Förderleistung wird für zu wenige Späne benötigt.

Die bekannte Handhobelmaschine ist in zwei Ausführungsbeispielen beschrieben. Bei dem Ausführungsbeispiel mit nur einem Kühlluftstrom ist der Fördereffekt nur in einer Vorzugsrichtung voll wirksam, nämlich dann, wenn die Kühlluft im wesentlichen parallel zum klappenartigen Ventil zur Auswurföffnung strömen kann.

Ist jedoch nicht die Vorzugsrichtung, sondern die Auswurföffnung entgegen der Vorzugsrichtung vorgewählt, prallt der Kühlluftstrom nahezu lotrecht auf das klappenartige Ventil, wobei die Geschwindigkeit des Luftstroms und damit die Förderwirkung infolge von Turbulenzen gemindert wird. Dabei kann der Spanförderkanal verstopfen.

Bei dem Ausführungsbeispiel mit zwei gleichzeitig beiderseits der Spanausschuböffnung fördernden Kühlluftströmen ist zwar die Förderwirkung verbessert, es verstärken sich jedoch auch die Turbulenzen im Bereich des Ventils. Dadurch ist der Wirkungsgrad der Spanförderung immer noch deutlich gemindert. Die verfügbare Förderleistung wird nur ungenügend genutzt.

Weitere Nachteile der Handhobelmaschine sind die verhältnismäßig geringe Dichtwirkung des Ventils und ein ständiger, unbeabsichtigter Späneaustritt auch aus der an sich verschlossenen Auswurföffnung sowie die schlechte Kennzeichnungsmöglichkeit der gewählten Spanauswurfrichtung und die Störanfälligkeit der aufwendig aufgebauten Ventillagerung.

### Vorteile der Erfindung

Die erfindungsgemäße Handhobelmaschine mit den kennzeichnenden Merkmalen des Anspruchs 1 hat demgegenüber den Vorteil, daß in jeder Auswurfrichtung der Spanabtransport in gleicher, hoher Qualität erfolgt. Außerdem ist das Ventil besonders gut abgedichtet, so daß jede Auswurfrichtung eindeutig festgelegt ist und ein Spanauswurf bzw. Staubbelästigung in unbeabsichtigter Richtung nicht möglich ist. Die gewählte Auswurfrichtung kann am Ventil besonders gut kenntlich gemacht werden und das Einstellen des Ventils ist äußerst einfach.

Außerdem ist das Ventil robust aufgebaut und einfach herstellbar. Störungen sind praktisch ausgeschlossen.

Weitere, vorteilhafte Ausgestaltungen der Erfindung ergeben sich aus den abhängigen Ansprüchen. Dadurch, daß stets derjenige der beiden Luftführungskanäle geöffnet ist, der den Ejektor- bzw. den Saugpumpeneffekt durch Überblasen der Spanausschuböffnung am effektivsten erzeugt, ist in beiden Auswurfrichtungen der Spanabtransport gleich gut und jeweils besser als nach dem Stand der Technik bekannt.

### Zeichnung

Ein Ausführungsbeispiel der Erfindung ist in der nachfolgenden Beschreibung anhand der zugehörigen Zeichnung näher erläutert.

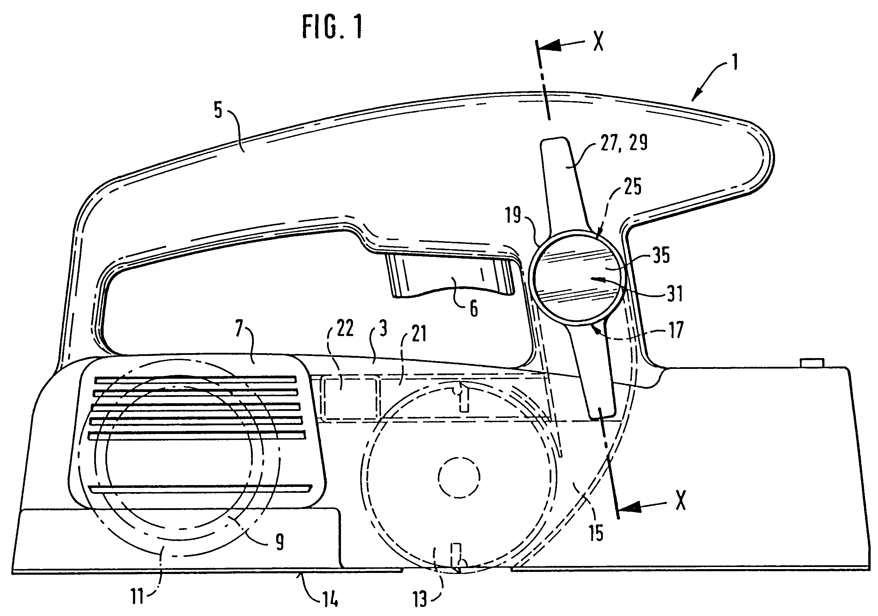

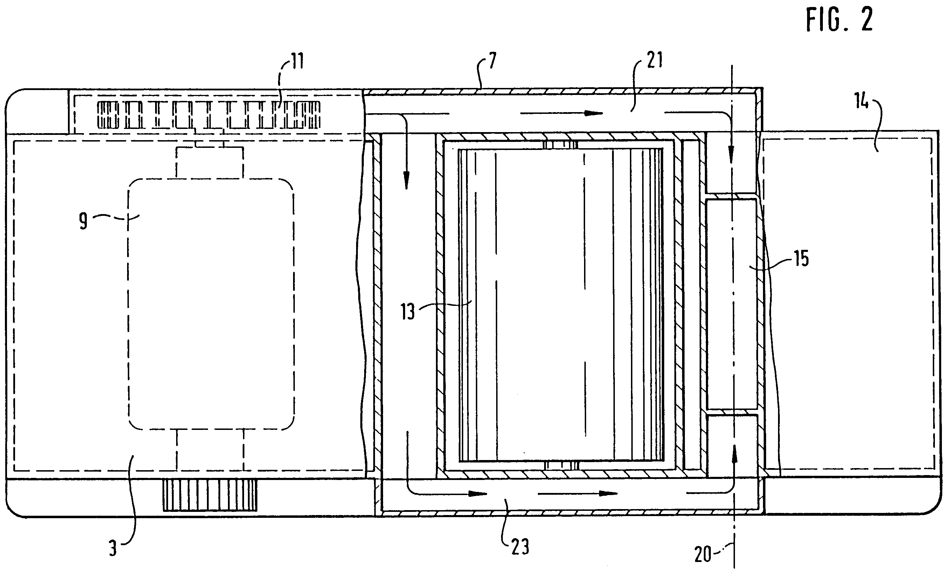

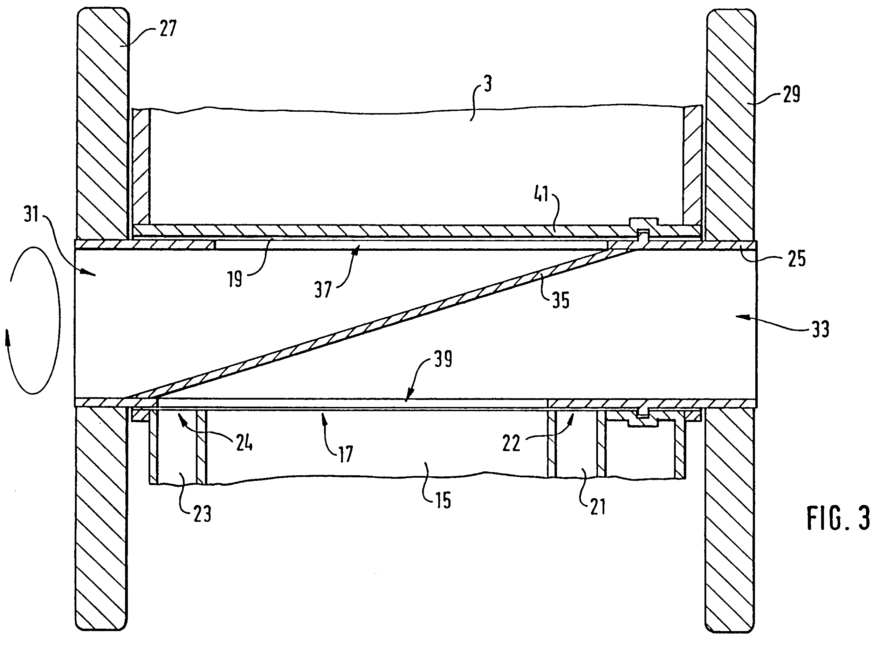

Es zeigen Figur 1 die Seitenansicht einer Handhobelmaschine gemäß der Erfindung, Figur 2 die Ansicht des Ausführungsbeispiels gemäß Figur 1 von unten und die Figur 3 eine vergrößerte Darstellung des Ventils des Ausführungsbeispiels gemäß Figur 1.

### Beschreibung des Ausführungsbeispiels

Die in Figur 1 in seitlicher Darstellung gezeigte Handhobelmaschine 1 besteht aus einem Gehäuse 3 mit Handgriff 5 und einer seitlichen Abdeckung 7, unter der ein nur schematisch dargestellter Elektromotor 9 mit einem axial darauf angeordneten Lüfterrad 11 angeordnet ist. Eine ebenfalls nur schematisch dargestellter Hobelkopf 13 ist parallel zum Elektromotor 9 im Gehäuse 3 der Handhobelmaschine 1 gelagert. Ein tangential von der Hobelwalze 13 nach oben in Richtung des Handgriffs 5 wegführender, gekrümmter Spanförderkanal 15 endet in einer Spanausschuböffnung 17. Diese mündet in einen hohlzylindrischen Führungskörper 19, der parallel oberhalb des Hobelkopfes 13 angeordnet ist.

In den Führungskörper 19 münden jeweils neben der Spanausschuböffnung 17 auf einander gegenüberliegenden Seiten die Öffnungen eines ersten und eines zweiten Luftführungskanals 21, 23, die nur schematisch dargestellt sind und eine nicht näher dargestellte Eintrittsöffnung zum Lüfterrad 11 aufweisen bzw. die unter die Abdeckung 7 führen. Der erste Luftführungskanal 21 führt mit nur einer Umlenkung zu seiner Mündung 22 neben dem zylindrischen Führungskörper 19. Der zweite Luftführungskanal 23 zweigt vom ersten Luftführungskanal 21 zur gegenüberliegenden Seite des Handhobels 1 ab. Von dort führt er mit zwei knieartigen nicht näher dargestellten Krümmungen zum hohlzylindrischen Führungskörper 19 bzw. zu seiner Mündung 24.

Im Führungskörper 19 ist ein rohrartiges Ventil 25 um seine Achse drehbar, jedoch axial unverschieblich gelagert. Beiderseits des Gehäuses 3 trägt das Ventil 25 knebelartige Handgriffe 27, 29. Aus der Zeichenebene heraus weisend führt eine erste Auswurföffnung 31, der eine symmetrisch zu dieser in die entgegengesetzte Richtung weisende zweite Auswurföffnung 33, nicht näher dagestellt, entspricht. Im Inneren des Ventils 25 ist in der Art einer schiefen Ebene eine Trennwand 35 dicht angeordnet, so daß zwei von einander getrennte, symmtrische Innenräume gebildet werden.

In Figur 2 ist eine Draufsicht von unten auf die teilweise aufgebrochen Sohle 14 der Handhobelmaschine gezeigt. Im Gehäuse 3 ist der Elektromotor 9 mit dem axial darauf angeordneten Lüfterrad 11 erkennbar. Die Abdeckung 7 ist in axialer Richtung zum Lüfterrad 11 auf dem Gehäuse 3 dicht befestigt. Unter dieser verläuft der erste Luftführungskanal 21, der in Längsrichtung des Hobels 1 am Hobelkopf 13 vorbei bis an den Spanförderkanal 15 und von dort in einer ersten, knieartigen Krümmung in das Innere der Handhobelmaschine 1 führt und dort in einer weiteren Krümmung senkrecht nach oben parallel zum Spanförderkanal 15 bis zum Führungskörper 19 mit der Achse 20 führt.

Der zweite Luftführungskanal 23 zweigt parallel zum Hobelkopf 13 vor diesem vom ersten Luftführungskanal 21 ab, führt nach einer ersten im wesentlichen rechtwinkligen Krümmung waagerecht bis an den Spanförderkanal 15, von dort knieartig in einer weitern Krümmung parallel zum Hobelkopf 13 ins Innere des Gehäuses 3 und dort unmittelbar in einer letzten, knieartigen Krummung nach oben zum Führungskörper 19 parallel zum Spanförderkanal 15.

In Figur 3 ist die vergrößerte Teilansicht des Schnittes X-X aus Figur 1 gezeigt. Das Gehäuse 3 bildet oberhalb des nicht dargestellten Hobelkopfs den hohlzylindrischen Führungskörper 19, in dem das rohrartige Ventil 25 in nicht näher bezeichneten Mitteln axial verschiebesicher und drehbar gelagert angeordnet ist. An den Enden des Ventils 25 sitzen Handgriffe 27, 29. Im Inneren des Ventils 25 verläuft eine Trennwand 35, das Innere des Ventils 25 symmetrisch in zwei gleiche Teile, die gegeneinander abdichtet sind, zu unterteilen.

Auf der linken Seite befindet sich die erste Auswurföffnung 31, auf der rechten Seite die zweite Auswurföffnung 33. In der Wandung des Ventils 25 befinden sich zueiander versetzt auf einander gegenüberliegenden Seiten fensterartige` radiale Durchbrüche 37, 39 gleicher Abmessung.

Von unten führen der erste Luftführungskanal 21 und der zweite Luftführungskanal 23 beiderseits des Spanförderkanals 15 zum Führungskörper 19. Die Mündungen 22, 24 schließen bündig mit der Spanausschuböffnung 17 des Spanförderkanals 15 ab.

In der in Figur 3 gezeigten Stellung des Ventils 25 ist die Mündung 22 des ersten Luftführungskanals 21 durch die Rohrwandung des Ventils 25 verschlossen, während die Mündung 24 des zweiten Luftführungskanals 23 und die Spanausschuböffnung 17 in Überdeckung zum radialen Durchbruch 39 sich befinden. Dadurch ist die zweite Auswurföffnung 33 in dieser Position aktiviert.

Beim Einschalten des Elektromotors 9 über den Ein- und Ausschalter 6 wird durch das rotierende Lüfterrad 11 ein Luftstrom erzeugt, der über die Mündung 24 des zweiten Luftführungskanals 23 über den radialen Durchbruch 39 zur zweiten Auswurföffnung 33 gelangt. Dabei überströmt dieser Luftstrom die Spanausschuböffnung 17 und reißt, saugpumpenartig fördernd im Spanförderkanal 15 befindliche Hobelspäne durch die Auswurföffnung 33 hinaus.

Durch Drehen des Ventils 25 um 180° um seine Achse wird der radiale Durchbruch 37 zur Spanausschuböffnung 17 sowie der Mündung 22 des ersten Luftführungskanals 21 positioniert. In dieser Position wird die Mündung 24 des zweiten Luftführungskanals 23 durch die Rohrwandung des Ventils 25 verschlossen. Bei Betätigen des Elektromotors 9 in der zuvor beschriebenen Weise erzeugt das Lüfterrad 11 einen Luftstrom, der über den ersten Luftführungskanal 21 und vollständig von der Mündung 22 aus die Spanausschuböffnung 17 überströmt. In dieser möglichen Position des Ventils 25 reißt der durch die Mündung 22 des Luftführungskanals 21 tretende Luftstrom, die im Spanförderkanal 15 befindliche Späne zur ersten Auswurföffnung 31.

In jeder Position ist der bestmögliche Saugpumpeneffekt wahlweise über die Luftführungskanäle 21, 23 gesichert. Dadurch, daß die radialen Durchbrüche 37, 39 einander diametral gegenüberliegen und völlig dicht gegeneinander abgetrennt sind, können die Späne nicht unbeabsichtigt über beide Auswurföffnungen 31, 33 zugleich ausgeworfen werden.

Bei einem nicht dargestellten Ausführungsbeispiel der Erfindung kann an jede der Spanauswurföffnungen ein zusätzliches, externes Saugaggregat angekoppelt werden und es ist nur ein einziger Handgriff am Ventil angeordnet, so daß die Handhobelmaschine leichter wird und kostengünstiger herstellbar ist.

## Patentansprüche

1. Handhobelmaschine mit einem Gehäuse (3), in dem ein von einem Motor (9) antreibbarer Hobelkopf (13) gelagert ist, wobei ein mit dem Motor (9) verbundener Lüfter (11) einen Luftstrom mit Ejektor-Saugwirkung zum Spantransport erzeugt, der in zwei, an je einer Seite des Maschinengehäuses verlaufenden Luftführungskanälen (21, 23) in den Bereich eines Umschaltventils (25) geführt wird, das den Spänestrom aus einem Spanförderkanal (15) zusammen mit dem Luftstrom zu einer von zwei wählbaren, an je einer Seite des Maschinengehäuses (3, 5) angeordneten Spanauswurföffnungen (31, 33) leitet, dadurch gekennzeichnet,
daß in einer ersten Schaltposition des Umschaltventils (25) der Luftstrom über den einen der beiden Luftführungskanäle (21, 23) in Richtung der gewählten Spanauswurföffnung (31, 33) geführt wird, wobei der andere der beiden Luftführungskanäle (21, 23) geschlossen ist und daß in einer zweiten Schaltposition des Umschaltventils (25) der Luftstrom über den anderen, in der ersten Schaltposition geschlossenen Luftführungskanal (21, 23) geführt wird, wobei der in der ersten Schaltposition geöffnete Luftführungkanal (21, 23) geschlossen ist.

2. Handhobelmaschine nach Anspruch 1, dadurch gekennzeichnet, daß der Luftstrom ausschließlich zur Erzeugung einer Ejektor-Saugwirkung über dessen Spanausschuböffnung (17) dicht an dieser vorbeigeführt ist.

3. Handhobelmaschine nach Anspruch 2, dadurch gekennzeichnet,daß die zwei Luftführungskanäle (21, 23) neben der Spanausschuböffnung (17) Mündungen (22, 24) bilden.

4. Handhobelmaschine nach Anspruch 3, dadurch gekennzeichnet, daß die Achse der Mündungen (22, 24) der Luftführungskanäle (21, 23) parallel oder quer zum Spanförderkanal (15) verläuft.

5. Handhobelmaschine nach den Ansprüchen 3 oder 4, dadurch gekennzeichnet, daß die Mündungen (22, 24) der Luftführungskanäle (21, 23) symmetrisch beiderseits der Spanausschuböffnung (17) enden.

6. Handhobelmaschine nach einem der Ansprüch 3, 4 oder 5, dadurch gekennzeichnet, daß stets eine der beiden Mündungen (22, 24) verschlossen ist und daß die geöffnete Mündung (22, 24) weiter von der Spanauswurföffnung (31, 33) entfernt ist als die Spanausschuböffnung (17).

7. Handhobelmaschine nach dem Oberbegriff des Anspruchs 1, dadurch gekennzeichnet, daß zum Umschalten des Luftstroms an der Spanausschuböffnung (17) ein rohrartiges Luftleitventil (25) drehbeweglich angeordnet ist, in dessen erster axialer Drehposition der Spanauswurf über die eine Auswurf-Öffnung (31) auf die eine Seite des Handhobels (33) und in dessen zweiter, axialer Drehposition der Spanauswurf über die andere Auswurföffnung (33) auf die andere Seite des Handhobels (33) erfolgt.

8. Handhobelmaschine nach Anspruch 6 oder einem der vorhergehenden Ansprüche, dadurch gekennzeichnet, daß das Luftleitventil (25) eine vorzugsweise schräg zur Rohrachse stehende Trennwand und zugeordnete Durchbrüche (37, 39) der Zylinderwand besitzt.

9. Handhobelmaschine nach Anspruch 7 oder einem der vorhergehenden Ansprüche, dadurch gekennzeichnet, daß die in der Wand des rohrartigen Luftleitmittels (25) angeordneten Durchbrüche (37, 39) radial auf gegenüberliegenden Seiten angeordnet sind und daß die im Inneren des Luftleitmittels (25) angeordnete Wand (35) dieses in zwei, insbesondere gleichgroße, voneinander abgedichtete Bereiche trennt.

10. Handhobelmaschine nach Anspruch 8 oder einem der vorhergehenden Ansprüche, dadurch gekennzeichnet, daß das Luftleitmittel (25) in einem, insbesondere durch das Gehäuse (3) gebildeten, hohlzylindrischen Führungskörper (9) drehbar angeordnet ist, in die die Mündungen der Luftführungskanäle (21, 23) und die Spanausschuböffnung (17) radial eintreten, mit denen sich die radialen Durchbrüche (37, 39) überdecken.

11. Handhobelmaschine nach Anspruch 9 oder einem der vorhergehenden Ansprüche, dadurch gekennzeichnet, daß die Durchbrüche (37, 39) weniger breit sind als die Mündungen der Luftführungskanäle (21, 23) und die Spanausschuböffnung (17) gemeinsam.

12. Handhobelmaschine nach Anspruch 10 oder einem der vorhergehenden Ansprüche, dadurch gekennzeichnet, daß an den einander, gegenüberliegenden Enden des Luftleitmittels (25) knebelartige Handgriff (27, 29) angeordnet sind.

## Claims

1. Hand-held planing machine with a housing (3) in which a planing head (13) which can be driven by a motor (9) is mounted, a fan (11) which is connected to the motor (9) generating an air stream with an ejector suction effect for chip transport which is guided in two air guide ducts (21, 23), each running along one side of the machine housing, into the region of a changeover valve (25) which guides the flow of chips out of a chip transport duct (15) together with the air stream to one of two selectable chip ejection openings (31, 33), each arranged on one side of the machine housing (3, 5), characterized in that, in a first position of the changeover valve (25), the air stream is guided via one of the two air guide ducts (21, 22) in the direction of the selected chip ejection opening (31, 33), the other of the two air guide ducts (21, 23) being closed, and in that, in a second position of the changeover valve (25), the air stream is guided via the other air guide duct (21, 23), which is closed in the first valve position, the air guide duct (21, 23) which is open in the first valve position being closed.

2. Hand-held planing machine according to Claim 1, characterized in that the air stream is guided past the chip expulsion opening (17) in close proximity to the latter, exclusively for the purpose of generating an ejector suction effect via its chip expulsion opening (17).

3. Hand-held planing machine according to Claim 2, characterized in that the two air guide ducts (21, 23) form outlets (22, 24) next to the chip expulsion opening (17).

4. Hand-held planing machine according to Claim 3, characterized in that the axis of the outlets (22, 24) of the air guide ducts (21, 23) extends parallel or transverse to the chip transport duct (15).

5. Hand-held planing machine according to Claims 3 or 4, characterized in that the outlets (22, 24) of the air guide ducts (21, 23) end symmetrically on both sides of the chip expulsion opening (17).

6. Hand-held planing machine according to one of Claims 3, 4 or 5, characterized in that one of the two outlets (22, 24) is closed at all times and in that the opened outlet (22, 24) is further away from the chip ejection opening (31, 33) than the chip expulsion opening (17).

7. Hand-held planing machine according to the precharacterizing clause of Claim 1, characterized in that a tubular air guide valve (25) is arranged rotatably at the chip expulsion opening (17) to switch over the air stream and, in the first axial rotational position of this valve, the chips are ejected via one ejection opening (31) on one side of the hand-held plane (33) while, in the second axial rotational position of the valve, the chips are ejected by the other ejection opening (33) on the other side of the hand-held plane (33).

8. Hand-held planing machine according to Claim 6 or one of the preceding claims, characterized in that the air guide valve (25) has a dividing wall which is preferably oblique to the tube axis and has associated apertures (37, 39) in the cylinder wall.

9. Hand-held planing machine according to Claim 7 or one of the preceding claims, characterized in that the apertures (37, 39) arranged in the wall of the tubular air guide means (25) are arranged radially on opposite sides and in that the wall (35) arranged in the interior of the air guide means (25) divides the said means into two regions, in particular regions of equal size, which are sealed off from one another.

10. Hand-held planing machine according to Claim 8 or one of the preceding claims, characterized in that the air guide means (25) is arranged rotatably in a hollow-cylindrical guide body (9), which is, in particular, formed by the housing (3), into which the outlets of the air guide duct (21, 23) and the chip expulsion opening (17), with which the radial apertures (37, 39) overlap, enter radially.

11. Hand-held planing machine according to Claim 9 or one of the preceding claims, characterized in that the apertures (37, 39) are less wide than the outlets of the air guide ducts (21, 23) and the chip expulsion opening (17) taken together.

12. Hand-held planing machine according to Claim 10 or one of the preceding claims, characterized in that toggle-like handles (27, 29) are arranged at the mutually opposite ends of the air guide means (25).

## Revendications

1. Rabot à main avec un boîtier (3), dans lequel est montée une tête de rabot (13) qui peut être entraînée par un moteur (9), un ventilateur (11) relié au moteur (9) pour produire un courant d'air avec un effet d'aspiration et d'éjection servant à transporter les copeaux de chacun des côtés du boîtier de la machine, courant d'air que l'on fait passer dans des canaux de passage d'air (21, 23) s'étendant dans la zone d'une vanne d'inversion (25) qui dirige le courant de copeaux provenant d'un canal de refoulement de copeaux (15), en même temps que le courant d'air, vers l'une au choix de deux ouvertures de rejet de copeaux (31, 33), disposées chacune d'un côté du boîtier de machine (3, 5),
caractérisé en ce que
dans une première position de commande de la vanne d'inversion (25), le courant d'air est guidé via l'un des deux canaux de passage d'air (21, 23) en direction de l'ouverture choisie de rejet de copeaux (31, 33), l'autre canal de passage d'air (21, 23) étant fermé, et en ce que dans une seconde position de branchement de la vanne d'inversion (25) le courant d'air est guidé par l'autre canal de passage d'air (21, 23) fermé dans la première position de commande, le canal de passage d'air (21, 23), ouvert dans la première position de branchement, étant ferme.

2. Rabot à main selon la revendication 1,
caractérisé en ce que
le courant d'air passe tout près devant l'ouverture d'évacuation de copeaux (17), exclusivement pour produire un effet d'aspiration et d'éjection au moyen de cette ouverture.

3. Rabot à main selon la revendication 2,
caractérisé en ce que
les deux canaux de passage d'air (21, 23) forment des embouchures (22, 24) en plus de l'ouverture d'évacuation de copeaux (17).

4. Rabot à main selon la revendication 3,
caractérisé en ce que
l'axe des embouchures (22, 24) des canaux de passage d'air (21, 23) s'étend parallèlement ou perpendiculairement au canal de refoulement de copeaux (15).

5. Rabot à main selon les revendications 3 ou 4,
caractérisé en ce que
les embouchures (22, 24) des canaux de passage d'air (21, 23) se terminent symétriquement des deux côtés de l'ouverture d'évacuation de copeaux (17).

6. Rabot à main selon l'une des revendications 3, 4 ou 5,
caractérisé en ce que
l'une des deux embouchures (22, 24) est fermée en permanence et en ce que l'embouchure ouverte (22, 24) est davantage éloignée de l'ouverture de rejet de copeaux (31, 33) que l'ouverture d'évacuation de copeaux (17).

7. Rabot à main selon le préambule de la revendication 1,
caractérisé en ce que
pour inverser le courant d'air on dispose sur l'ouverture d'évacuation de copeaux (17) une vanne de guidage d'air (25) ayant la forme d'un tube de façon qu'elle puisse tourner, alors que, dans sa première position axiale de rotation, le rejet des copeaux a lieu via l'une des ouvertures de rejet (31) sur l'un des côtés du rabot à main (33) et, dans sa seconde position axiale de rotation, le rejet des copeaux a lieu via l'autre ouverture de rejet (33) sur l'autre côté du rabot à main (33).

8. Rabot à main selon la revendication 7 ou l'une des revendications précédentes,
caractérisé en ce que
la vanne de guidage d'air (25) possède une cloison de séparation située de préférence obliquement par rapport à l'axe du tuyau, et des ajours correspondants (37, 39) dans la paroi du cylindre.

9. Rabot à main selon la revendication 8 ou l'une des revendications précédentes,
caractérisé en ce que
les ajours (37, 39) sont disposés dans la paroi du moyen de guidage d'air (25) en forme de tuyau, radialement sur des côtés opposés, et en ce que la paroi (33) disposée à l'intérieur du moyen de guidage d'air (25) sépare celui-ci en deux zones, en particulier de même grandeur, qu'on rend étanches l'une par rapport à l'autre.

10. Rabot à main selon la revendication 9 ou l'une des revendications précédentes,
caractérisé en ce que
le moyen de guidage d'air (25) est disposé de façon à pouvoir tourner dans un corps de guidage cylindrique creux (9), en particulier formé à travers le boîtier (3), dans lequel entrent radialement les embouchures des canaux de passage d'air (21, 23) et l'ouverture d'évacuation de copeaux (17), avec lesquelles les ajours radiaux (37, 39) se recouvrent.

11. Rabot à main selon la revendication 10 ou l'une des revendications précédentes,
caractérisé en ce que
les ajours (37, 39) sont moins larges que les embouchures des canaux de passage d'air (21, 23) et l'ouverture d'évacuation de copeaux (17) en même temps.

12. Rabot à main selon la revendication 11 ou l'une des revendications précédentes,
caractérisé en ce que
des poignées (27, 29) en forme de manettes sont disposées aux extrémités mutuellement opposées du moyen de guidage d'air (25).
